# EUROPEAN PATENT APPLICATION

(11) **EP 4 696 954 A1**
(43) Date of publication of application: **18.02.2026**
(21) Application number: 24788701.1
(22) Date of filing: 08.04.2024
(51) Int. Cl.: F25B 21/00, F25B 9/00, F25B 9/14

(54) **MAGNETIC REFRIGERATION DEVICE AND LIQUEFACTION DEVICE USING LOW-TEMPERATURE PUMP**

(30) Priority: 14.04.2023 JP 2023066486
(71) Applicant: National Institute for Materials Science, Tsukuba-shi, Ibaraki 305-0047 (JP)
(72) Inventor: KAMIYA Koji, Tsukuba-shi, Ibaraki 305-0047 (JP); SAITO Akiko, Tsukuba-shi, Ibaraki 305-0047 (JP); NUMAZAWA Takenori, Tsukuba-shi, Ibaraki 305-0047 (JP); NATSUME Kyohei, Tsukuba-shi, Ibaraki 305-0047 (JP)
(74) Representative: Berggren Oy
(86) International application number: PCT/JP2024/014293
(87) International publication number: WO 2024/214677

(57) **Abstract**

The present invention provides a magnetic refrigerator having low power consumption, using a low-temperature pump that uses bellows. This magnetic refrigerator is a magnetic refrigeration device that cools an object to be cooled, and comprises a low-temperature pump installed inside a cryostat for circulating a heat exchange gas, a magnetic refrigerator that cools using upper and lower magnetic working substances having a magnetocaloric effect, and a drive mechanism that feeds the heat exchange gas from the low-temperature pump to the magnetic refrigerator and feeds back the heat exchange gas to the low-temperature pump, the low-temperature pump being a structure in which at least a portion of the inside of upper and lower bellows is opened to a vacuum chamber side of the cryostat, and the upper and lower bellows are expanded/contracted in a state in which pressure is applied to a bellows chamber formed outside the upper and lower bellows, and the heat exchange gas in the bellows chamber is pushed out to the magnetic refrigerator side by the drive mechanism.

## Description

### TECHNICAL FIELD

The present invention relates to a magnetic refrigeration device and a liquefaction device using a cryogenic pump.

### BACKGROUND ART

A refrigeration system that can achieve a higher energy efficiency as compared to a conventional gas compression/expansion-type refrigerator includes a magnetic refrigeration (see, for example, Patent Literatures 1 and 2). Components of a magnetic refrigerator include a magnetic working substance that generates a magnetocaloric effect, a heat exchange gas that exchanges heat with the magnetic working substance, and a superconducting magnet that generates a magnetic field. Auxiliary devices include an actuator that takes the magnetic working substance into/out of the superconducting magnet, a room temperature pump that drives the heat exchange gas, and a vacuum heat insulating container referred to as a cryostat that maintains vacuum insulation. A magnetic working substance container, which contains the magnetic working substance inside the superconducting magnet, is taken in and out by means of a driving piston and at the corresponding timing, the room temperature pump causes the heat exchange gas to flow into the magnetic working substance container, thereby generating a refrigeration effect.

In general, the size of a pump is determined by the volume of a fluid to be pushed out, and as the size increases, the power consumption also increases. For example, a pump disclosed in Non-Patent Literature 1 has been installed at room temperature and had the power consumption reaching around 6.5 kW. In order for a cryogenic magnetic refrigerator to achieve a high energy efficiency, the pump that drives the heat exchange gas needs to be installed at a low temperature. However, typical compressors use oil, and thus cannot drive at low temperatures. The low temperature herein means a cryogenic temperature, for example, the liquid hydrogen temperature (20 K) or the liquid nitrogen temperature (77 K).

Another method is a displacer-type cryogenic pump (see, for example, Patent Literature 3). However, it is extremely difficult to precisely control the thermal contraction rate between a displacer and piping, making it difficult to ensure a high compression ratio or a large mass flow rate. There is also a method that uses flexible piping (bellows), but the bellows has a pressure of at most several atmospheres, and thus cannot address the heat exchange gas in the magnetic refrigeration that drives at a pressure of 10 atmospheres or more. The present invention has solved such problems of bellows and devised a structure allowing the bellows to be applicable to cryogenic pumps.

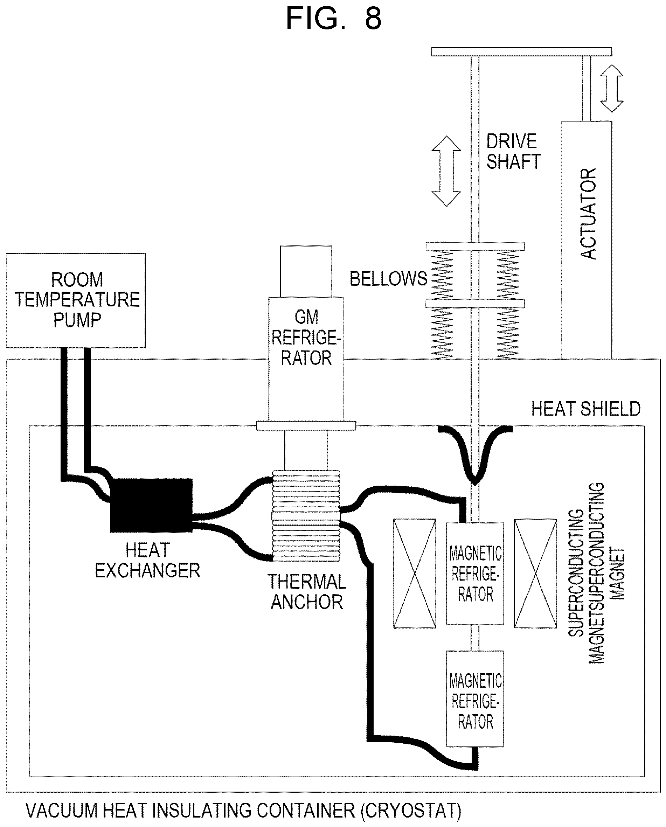

FIG. 8 is a schematic diagram showing a conceptual view of a conventional cryogenic magnetic refrigeration device. The cryogenic magnetic refrigeration device is installed inside a vacuum heat insulating container and is composed of a superconducting magnet, a magnetic refrigerator filled with a magnetic working substance, and an actuator that moves the magnetic working substance back and forth in and out of the magnet. The heat exchange gas needs to flow to the magnetic refrigerator, and a room temperature pump performs such a function.

Regenerative refrigerators, including magnetic refrigerators, need to reciprocate the heat exchange gas flowing inside the refrigerator, and to date, pumps installed at room temperature have been used. Since the size and the power consumption of a pump are determined in accordance with the volume of gas to be treated, when a highly energy-efficient magnetic refrigeration is constructed, it is desirable to use a cryogenic pump that can drive at low temperatures, such as around the temperature of liquid nitrogen (77K, -196°C). Meanwhile, typical pumps use oil, and thus have a lower limit of the temperature for use at low temperatures.

There are three main ideas for pumps capable of operating even at low temperatures. The first one is a method of driving a cryogenic gas using a cryogenic turbine (circulator), the second one is a method of using a displacer, and the third one is a method of using bellows. The concept of the turbine (circulator) method seems to be simply relocating a current room temperature pump to a low-temperature setting, but a cryogenic solenoid valve to switch the flow, as with the room temperature pump, is required. The cryogenic turbine (circulator) and the cryogenic solenoid valve are both extremely expensive, and the systems are very complicated. The method using a displacer-type pump involves inserting a piston into piping to push out gas as in a syringe, but at cryogenic temperatures, it is extremely difficult to drive the piston while maintaining high airtightness due to adhesion to the inner wall of the piping. In particular, the piston is often made of resin, and since a difference in thermal contraction rate from metal piping occurs as cooling is performed, it is extremely difficult to drive the piston without gas leakage. As the third method, use of flexible piping (bellows) may be considered, but in general, it is said that bellows have a pressure resistance of several atmospheres and thus cannot be used for magnetic refrigerators having an operating pressure of 10 atmospheres. Since cryogenic pumps are also the core of highly efficient magnetic refrigerators, a solution using a practical method to cryogenic pumps is required.

Further, the power consumption of the room temperature pump proposed in Non-Patent Literature 1 reaches around 6.5 kW, which has been an obstacle to a highly-efficient magnetic refrigeration. In addition, the device disclosed in Non-Patent Literature 1 requires a switching operation by a solenoid valve in addition to the room temperature pump for generating a reciprocating flow, and thus has a problem in that the valve system is complicated.

### CITATION LIST

### PATENT LITERATURE

PATENT LITERATURE 1: JP-A-2003-532861
PATENT LITERATURE 2: Japanese Patent No. 6381150
PATENT LITERATURE 3: JP-A-2013-79791

### NON PATENT LITERATURE

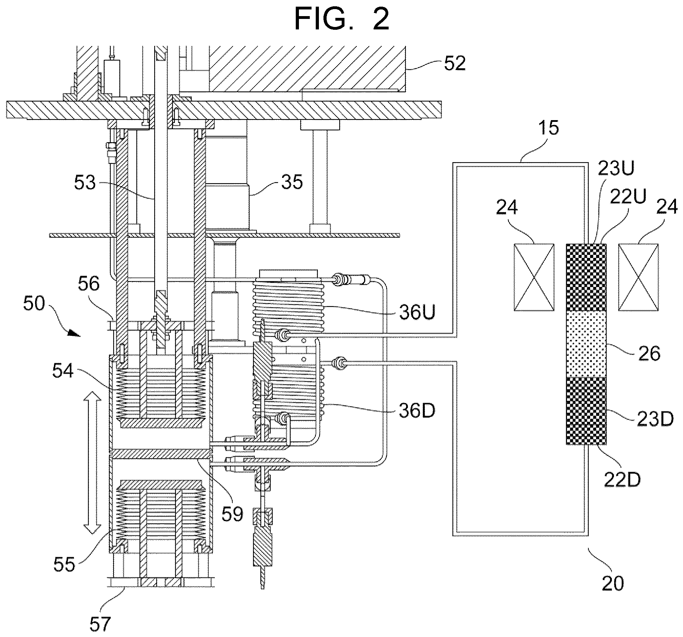

NON PATENT LITERATURE 1: Applied Physics Express, 15, 053001 (2022) Fig. 2, Pump and Valve System
NON PATENT LITERATURE 2: Cryogenic engineering, Vol. 16, PP.193-201(1981)

### SUMMARY OF INVENTION

### TECHNICAL PROBLEM

When a bellows is used as a cryogenic pump of a magnetic refrigerator, a fluid is sealed inside the bellows and pressurized, and thus, when a high operating pressure is required, the bellows needs to withstand the internal pressure. However, it is difficult to use the bellows under a pressure of several atmospheres or greater due to its structure. Some bellows are multi-layered or specially designed so as to be highly resistant to pressures, but are expensive, which has raised a problem of being inapplicable for general purposes.

The present invention solves such problems and has an object of providing a magnetic refrigeration device and a liquefaction device that use a bellows-type cryogenic pump.

### SOLUTION TO PROBLEM

To address these problems, the present inventors thought that if the pressure in use can be increased without any design change to typical bellows, the usability as a cryogenic pump would be expanded and conceived of the present invention. In other words, since the bellows has the property of being weak against an internal pressure while being relatively strong against an external pressure, an idea of a structure to solve the problems has been conceived in which with the pressure exerted on the outer side of the bellows instead of the inner side, the bellows are expanded and contracted to push out a fluid.

A magnetic refrigeration device according to the present invention is configured as follows.

A magnetic refrigeration device adapted to cool an object to be cooled, the magnetic refrigeration device including:
a cryostat with an inside evacuated to be heat insulative;
a cryogenic pump installed inside the cryostat to circulate a heat exchange gas;
a magnetic refrigerator installed inside the cryostat to cool using a magnetic working substance having a magnetocaloric effect;
a drive mechanism including a drive shaft to feed the heat exchange gas from the cryogenic pump to the magnetic refrigerator and to feed back the heat exchange gas to the cryogenic pump; and
a thermal anchor provided between the cryogenic pump and the magnetic refrigerator to cool the heat exchange gas,
wherein the cryogenic pump has an upper bellows and a lower bellows facing each other via a partitioning plate; at least a part of an inner side of each of the upper bellows and the lower bellows is opened to a vacuum chamber side of the cryostat; and with the heat exchange gas under pressure, contained in an upper bellows chamber and a lower bellows chamber that are respectively formed on outer sides of the upper bellows and the lower bellows, the upper bellows and the lower bellows are alternately expanded and contracted so that the heat exchange gas in one of the upper bellows chamber and the lower bellows chamber is pushed out to a magnetic refrigerator side by the drive shaft, and the heat exchange gas in the other of the upper bellows chamber and the lower bellows chamber is sucked from the magnetic refrigerator side by the drive shaft.

In the magnetic refrigeration device according to the present invention, it is preferable that the magnetic refrigerator includes:
a magnetic working substance container filled with the magnetic working substance having the magnetocaloric effect;
a magnetic field generating unit disposed so as to surround the magnetic working substance container, the magnetic field generating unit being adapted to apply a magnetic field to the magnetic working substance; and
a mechanism adapted to cause the magnetic working substance to continuously or intermittently perform a reciprocating movement so as to be taken in and out of the magnetic field,
wherein the cryogenic pump is configured to operate with an active magnetic regenerator (AMR) system in which the heat exchange gas is caused to flow through the magnetic working substance container in synchronization with the reciprocating movement of the magnetic working substance, thereby performing heat exchange with the magnetic working substance.

In the magnetic refrigeration device according to the present invention, the cryogenic pump may be preferably configured as follows.

The cryogenic pump comprises:
the upper bellows having one end fixed to an upper flange and an upper sealing plate fixed to the other end;
the lower bellows having one end fixed to a lower flange and a lower sealing plate fixed to the other end;
an upper bellows chamber peripheral wall fixed to the upper flange so as to surround the outer side of the upper bellows;
a lower bellows chamber peripheral wall fixed to the lower flange so as to surround the outer side of the lower bellows; and
the partitioning plate fixed to an inner side of a boundary between the upper bellows chamber peripheral wall and the lower bellows chamber peripheral wall, the partitioning plate provided so as to be positioned between the upper sealing plate and the lower sealing plate,
wherein
an inner side of an upper flange side of the upper bellows and an inner side of a lower flange side of the lower bellows are opened to the vacuum chamber side of the cryostat,
an upper piping port is provided in the upper bellows chamber formed by the upper bellows, the upper flange, the upper bellows chamber peripheral wall, the partitioning plate, and the upper sealing plate,
a lower piping port is provided in the lower bellows chamber formed by the lower bellows, the lower flange, the lower bellows chamber peripheral wall, the partitioning plate, and the lower sealing plate, and
the heat exchange gas contained in the upper bellows chamber and the lower bellows chamber is configured to switch a direction flowing from an upper piping port side to a lower piping port side and a direction flowing from the lower piping port side to the upper piping port side, by causing volumes of the upper bellows chamber and the lower bellows chamber complementarily increased and decreased across the partitioning plate.

Further, the cryogenic pump according to the present invention may be configured as follows.

The cryogenic pump includes:
the upper bellows composed of an upper outer bellows and an upper inner bellows that are disposed concentrically around a center axis of the drive shaft, the upper outer bellows having one end entirely fixed to an upper flange and the other end entirely fixed to an outer upper sealing plate, the upper inner bellows having one end entirely fixed to the upper flange and the other end entirely fixed to an inner upper sealing plate, the upper inner bellows being opened to the vacuum chamber side of the cryostat through an opening of the upper flange provided on an inner side relative to an inner perimeter of the upper inner bellows,;
the lower bellows composed of a lower outer bellows and a lower inner bellows that are disposed concentrically around the center axis of the drive shaft, the lower outer bellows having one end entirely fixed to a lower flange and the other end entirely fixed to an outer lower sealing plate, the lower inner bellows having one end entirely fixed to the lower flange and the other end entirely fixed to an inner lower sealing plate, the lower inner bellows being opened to the vacuum chamber side of the cryostat through an opening of the lower flange provided on an inner side relative to an inner perimeter of the lower inner bellows,;
an upper bellows chamber peripheral wall fixed to the upper flange so as to surround an outer side of the upper outer bellows;
a lower bellows chamber peripheral wall fixed to the lower flange so as to surround an outer side of the lower outer bellows; and
the partitioning plate fixed to an inner side of a boundary between the upper bellows chamber peripheral wall and the lower bellows chamber peripheral wall, the partitioning plate provided between the upper sealing plate and the lower sealing plate,
wherein
an upper bellows space surrounded by the upper outer bellows, the upper inner bellows, the outer upper sealing plate, the inner upper sealing plate, and the upper flange, and a lower bellows space surrounded by the lower outer bellows, the lower inner bellows, the outer lower sealing plate, the inner lower sealing plate, and the lower flange are filled with a fluid, the fluid in the upper bellows space and the fluid in the lower bellows space further communicating with each other through a bypass line coupling the upper bellows space and the lower bellows space,
an upper piping port is provided in the upper bellows chamber formed by the upper outer bellows, the upper flange, the upper bellows chamber peripheral wall, the outer upper sealing plate, and the partitioning plate,
a lower piping port is provided in the lower bellows chamber formed by the lower outer bellows, the lower flange, the lower bellows chamber peripheral wall, the outer lower sealing plate, and the partitioning plate, and
the heat exchange gas contained in the upper bellows chamber and the lower bellows chamber is configured to switch a direction flowing from an upper piping port side to a lower piping port side and a direction flowing from the lower piping port side to the upper piping port side, by causing a volume of each of the upper bellows chamber and the lower bellows chamber complementarily increased and decreased across the partitioning plate.

In the cryogenic pump of the magnetic refrigeration device according to the present invention, it is preferable that the upper flange and the lower flange, and the partitioning plate are fixedly coupled to a housing of the cryostat, and the volume of the heat exchange gas contained in the upper bellows chamber and the lower bellows chamber, which are partitioned by the partitioning plate, is caused to be increased and decreased by moving up and down simultaneously the upper sealing plate or the outer upper sealing plate and the lower sealing plate or the outer lower sealing plate relative to the partitioning plate by the drive shaft of the drive mechanism fixed to the housing of the cryostat,.

In the cryogenic pump according to the present invention, the pump volume is the internal volume of the upper bellows chamber, the lower bellows chamber, and external piping. The mechanism is that the partitioning plate installed at the boundary between the upper bellows chamber and the lower bellows chamber is moved relative to the upper sealing plate and the lower sealing plate, so that the ratio of the upper and lower pump volumes changes, thereby causing the heat exchange gas to flow.

In the magnetic refrigeration device according to the present invention, the heat exchange gas is preferably a cryogenic gas including helium, hydrogen, nitrogen, oxygen, a natural gas, and the like.

In the magnetic refrigeration device according to the present invention, the thermal anchor may be cooled by a refrigerator with a gas compression/expansion system including a GM refrigerator, a pulse tube refrigerator, and a Stirling refrigerator.

In the magnetic refrigeration device according to the present invention, the magnetic field generating unit may be a permanent magnet or a superconducting magnet.

Further, using the magnetic refrigeration device of the present invention, a liquefaction device can be configured that generates a liquid from a cryogenic gas including hydrogen and helium.

### ADVANTAGEOUS EFFECTS OF INVENTION

The magnetic refrigeration device in which a cryogenic pump using a bellows is mounted according to the present invention is simplified in structure as compared to conventional cold storage-type cryogenic refrigerators (for example, Patent Literature 1) and is compact in overall device size, and can achieve stable operation of magnetic refrigeration.

According to the cryogenic pump using the bellows of the present invention, it is possible to realize a cryogenic pump that can operate relatively easily at high operating pressures by using an external pressure bellows-type cryogenic pump for the cryogenic pump. When compared with a case in which a special and expensive bellows or an expensive pump using a turbine (circulator) is used to realize a pump with high operating pressures at cryogenic temperatures, the external pressure bellows-type cryogenic pump of the present invention has advantages in that it can be realized with commercial components that are highly available and can be manufactured at low cost.

### BRIEF DESCRIPTION OF DRAWINGS

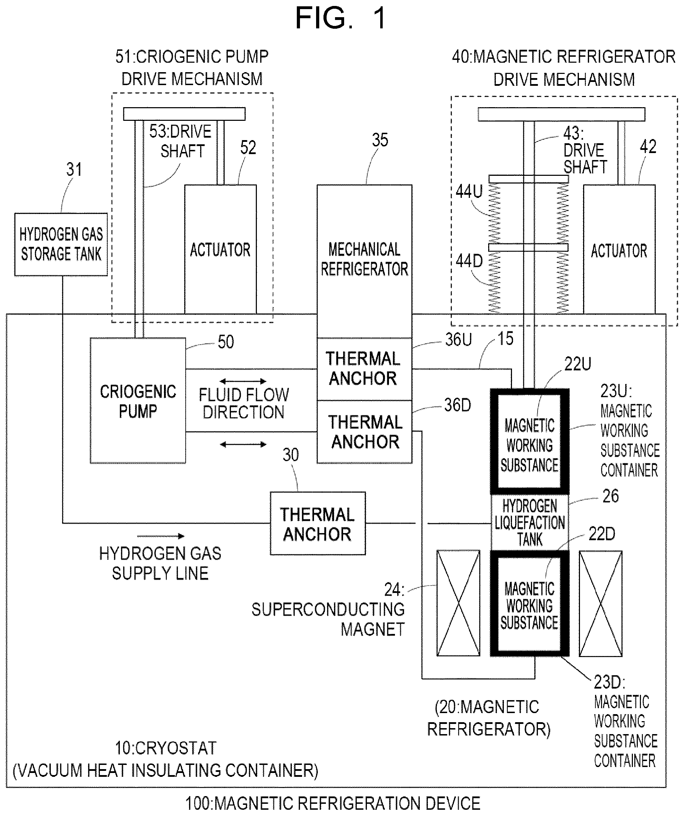

[FIG. 1] FIG. 1 is a configurational block diagram of a magnetic refrigeration device using a cryogenic pump according to the present invention.
[FIG. 2] FIG. 2 is a configurational view of a main part of the magnetic refrigeration device using an external pressure bellows-type cryogenic pump, showing particularly a detailed structure as one embodiment of the present invention.

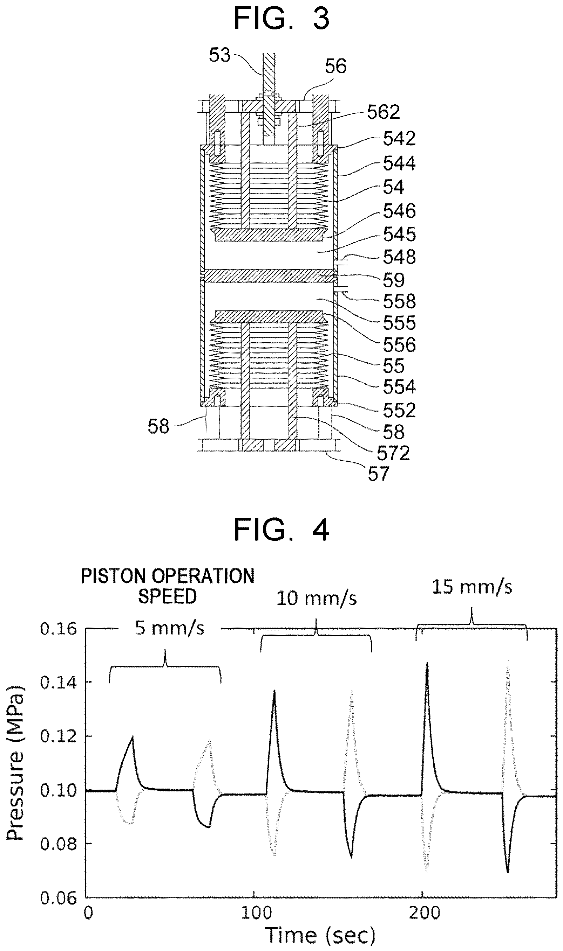

[FIG. 3] FIG. 3 is a configurational view of a main part of the external pressure bellows-type cryogenic pump as one embodiment of the present invention.
[FIG. 4] FIG. 4 is a graph showing experiment results of pump operation using the external pressure bellows-type cryogenic pump shown in FIG. 3 and showing a change in pressure over time.

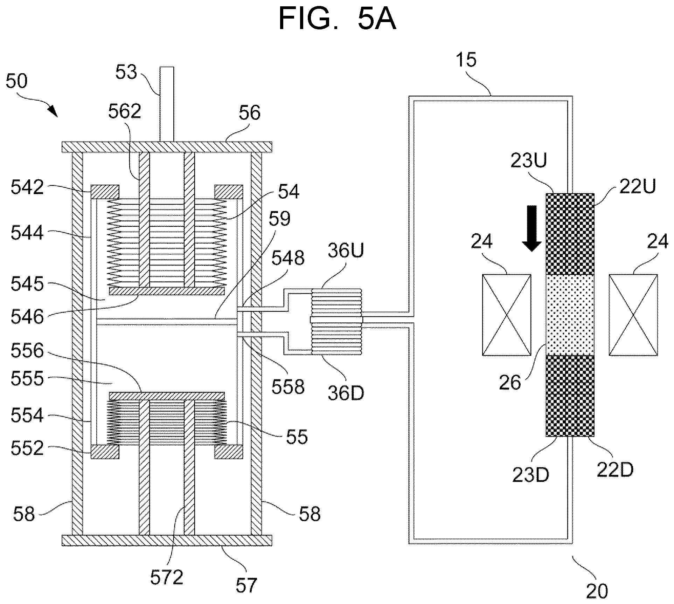

[FIG. 5A] FIG. 5A is a schematic view showing the configuration of the magnetic refrigeration device with the external pressure bellows-type cryogenic pump as one embodiment of the present invention and the position of a magnetic working substance and a change in a flow of a heat exchange gas in an AMR cycle, and showing the initial state where excitation of an upper magnetic working substance 22U and demagnetization of a lower magnetic working substance 22D are performed.

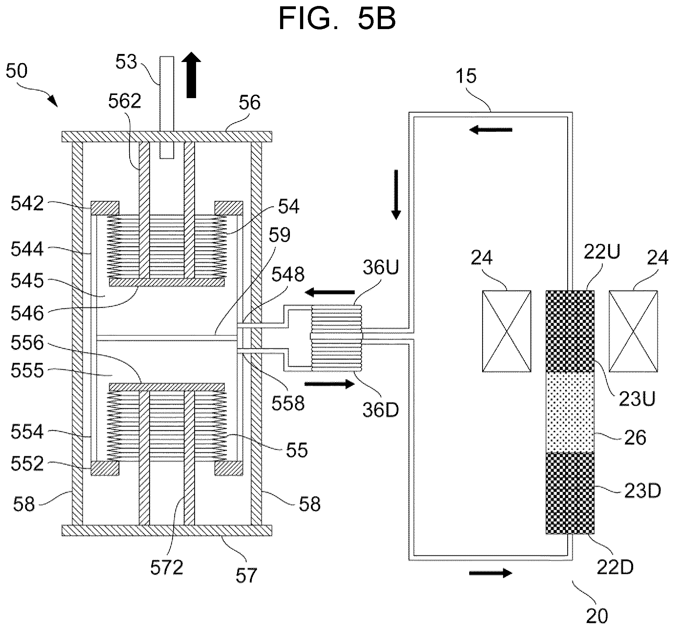

[FIG. 5B] FIG. 5B is a schematic view showing the configuration of the magnetic refrigeration device with the external pressure bellows-type cryogenic pump as one embodiment of the present invention and the position of the magnetic working substance and a change in a flow of the heat exchange gas in the AMR cycle, and showing a state in which the heat exchange gas is caused to flow counterclockwise from a lower side to an upper side in the magnetic working substance to perform the heat exchange.

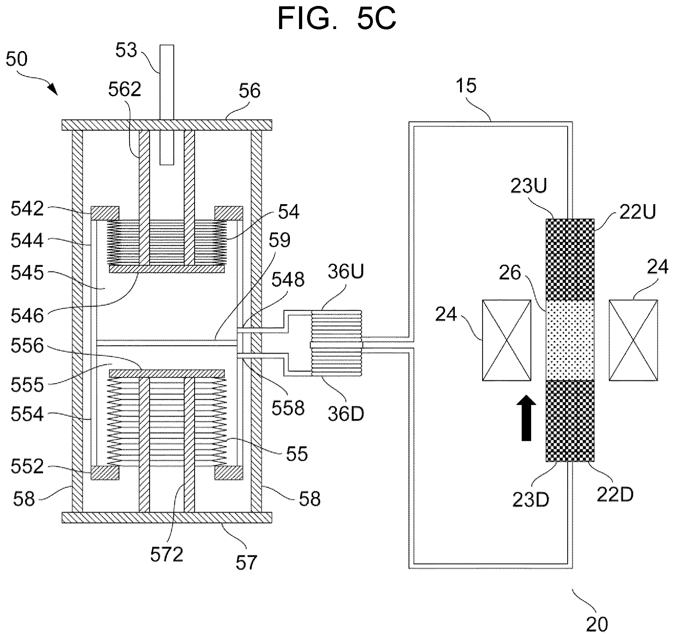

[FIG. 5C] FIG. 5C is a schematic view showing the configuration of the magnetic refrigeration device with the external pressure bellows-type cryogenic pump as one embodiment of the present invention and the position of the magnetic working substance and a change in a flow of the heat exchange gas in the AMR cycle, where demagnetization of the upper magnetic working substance 22U and excitation of the lower magnetic working substance 22D are performed.

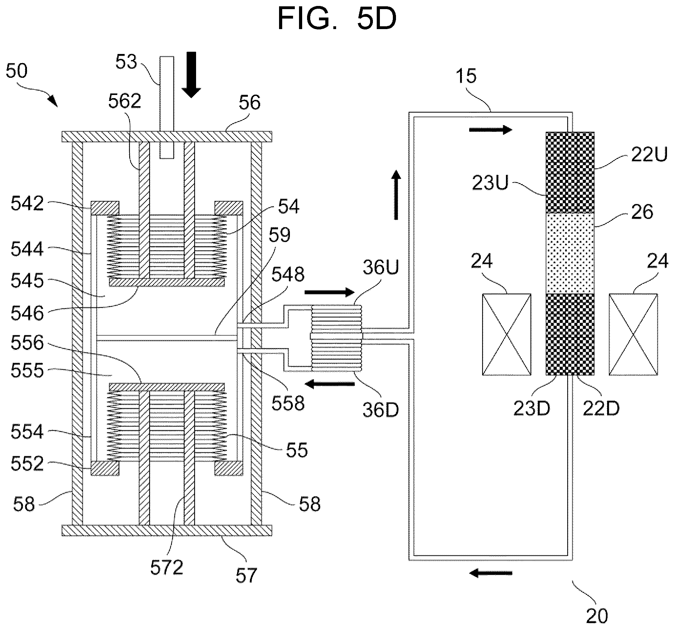

[FIG. 5D] FIG. 5D is a schematic view showing the configuration of the magnetic refrigeration device with the external pressure bellows-type cryogenic pump as one embodiment of the present invention and the position of the magnetic working substance and a change in a flow of the heat exchange gas in the AMR cycle, showing a state in which the heat exchange gas is caused to flow clockwise from an upper side to a lower side in the magnetic working substance to perform the heat exchange.

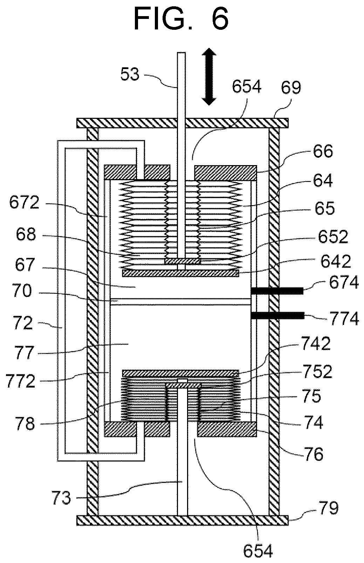

[FIG. 6] FIG. 6 is a configurational view of a main part of a double external pressure bellows-type cryogenic pump, which is another embodiment of the present invention.

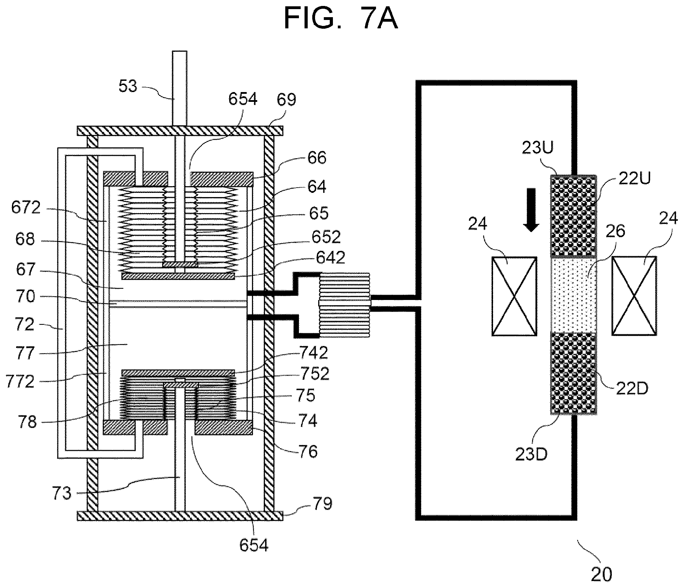

[FIG. 7A] FIG. 7A is a schematic view showing the configuration of the magnetic refrigeration device with the double external pressure bellows-type cryogenic pump, which is the other embodiment of the present invention, and the position of the magnetic working substance and a change in a flow of the heat exchange gas in the AMR cycle, and showing the initial state where excitation of the upper magnetic working substance 22U and demagnetization of the lower magnetic working substance 22D are performed.

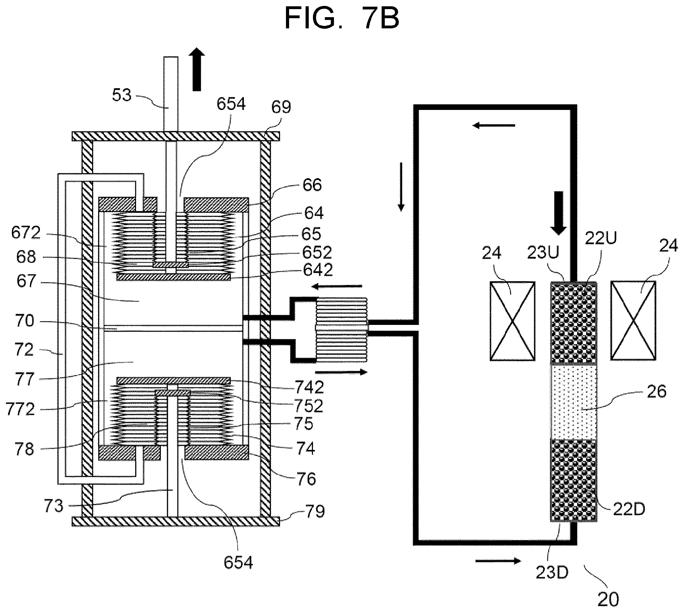

[FIG. 7B] FIG. 7B is a schematic view showing the configuration of the magnetic refrigeration device with the double external pressure bellows-type cryogenic pump, which is the other embodiment of the present invention, and the position of the magnetic working substance and a change in a flow of the heat exchange gas in the AMR cycle, and showing a state in which the heat exchange gas is caused to flow counterclockwise from a lower side to an upper side in the magnetic working substance to perform the heat exchange.

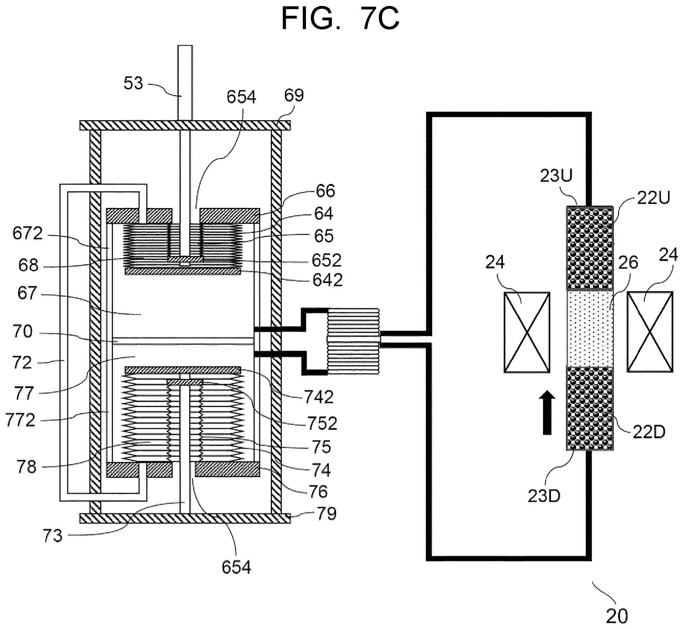

[FIG. 7C] FIG. 7C is a schematic view showing the configuration of the magnetic refrigeration device with the double external pressure bellows-type cryogenic pump, which is the other embodiment of the present invention, and the position of the magnetic working substance and a change in a flow of the heat exchange gas in the AMR cycle, where demagnetization of the upper magnetic working substance 22U and excitation of the lower magnetic working substance 22D are performed.

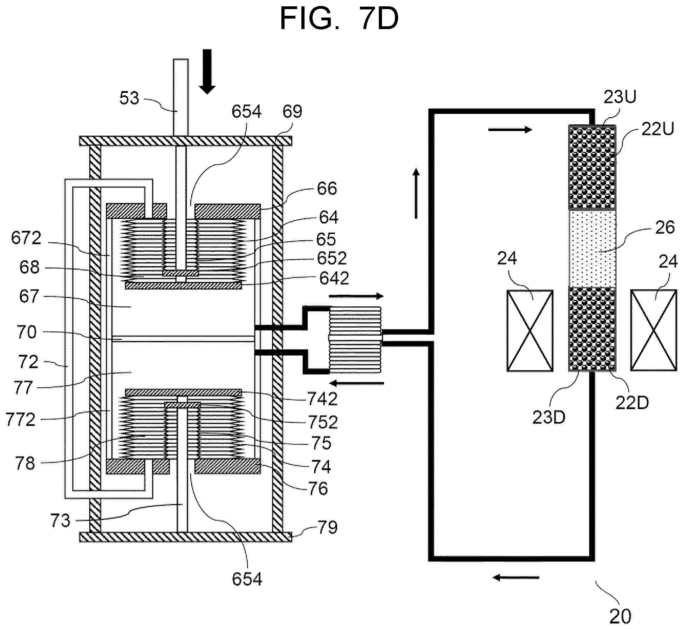

[FIG. 7D] FIG. 7D is a schematic view showing the configuration of the magnetic refrigeration device with the double external pressure bellows-type cryogenic pump, which is the other embodiment of the present invention, and the position of the magnetic working substance and a change in a flow of the heat exchange gas in the AMR cycle, showing a state in which the heat exchange gas is caused to flow clockwise from an upper side to a lower side in the magnetic working substance to perform the heat exchange.
[FIG. 8] FIG. 8 is a configurational block diagram of a magnetic refrigeration device using a conventional room temperature pump, which is composed of a magnetic refrigerator superconducting magnet, a magnetic working substance, and a heat exchanger and includes a room temperature pump for circulating a heat exchange gas.

The definitions of the terms used in the present description are shown below. An "external pressure bellows-type cryogenic pump" refers to a cryogenic pump that expands and contracts bellows by applying a higher pressure on an outer side of the bellows and a lower pressure (vacuum) on an inner side, taking advantage of the property of the bellows of being weak against an internal pressure while being strong against an external pressure, so that a highpressure and cryogenic fluid can be driven as compared to typical bellows. Further, a "double external pressure bellows-type cryogenic pump" is a pump in which an auxiliary bellows with a smaller diameter is added inside an external pressure bellows to further increase the pressure resistance of the external pressure bellows-type cryogenic pump by bringing the pressure difference between the inside and the outside of the bellows to zero. With the auxiliary bellows, the pressure inside and outside of the external pressure bellows can be made the same, thereby enabling to drive a gas with a further higher pressure. Meanwhile, the use environment is that the auxiliary bellows is under the same pressure conditions as those of prior external pressure bellows, that is, the outer side of the auxiliary bellows is at a high pressure and the inner side is at a low pressure, but since the diameter is far smaller than that of the external pressure bellows, there are advantages in that the pressure resistance is high and commercial bellows are available.

Hereinafter, the best mode for carrying out the present invention will be described in detail.

FIG. 1 is a configurational block diagram of a magnetic refrigeration device using a cryogenic pump showing one embodiment of the present invention. The magnetic refrigeration device includes, as the main components, a cryostat 10, a heat exchange gas 15, a magnetic refrigerator 20, a mechanical refrigerator 35, thermal anchors 36U and 36D, a magnetic refrigerator drive mechanism 40, and a cryogenic pump 50. The magnetic refrigerator drive mechanism 40 includes an actuator 42, a drive shaft 43, and drive mechanism bellows 44U and 44D, while a cryogenic pump drive mechanism 51 adapted to drive the cryogenic pump 50 includes an actuator 52 and a drive shaft 53.

When applied to a hydrogen liquefaction device, a hydrogen gas storage tank 31 for storing a hydrogen gas as an object to be cooled, a hydrogen gas supply line, and a thermal anchor 30 are further provided, and the hydrogen gas fed via the hydrogen gas supply line is liquefied in the magnetic refrigerator 20.

The cryostat 10 is a vacuum heat insulating container made of stainless steel, aluminum, or FRP, the inside of which can be evacuated, and can maintain the inside at a cryogenic temperature including, for example, the liquid helium temperature of 4 K and the liquid nitrogen temperature of 77 K. The drive shaft 53 is a rod-shaped member that transmits power of the actuator 52 of the cryogenic pump drive mechanism 51 to feed the heat exchange gas 15 from the cryogenic pump 50 to the magnetic refrigerator 20 and feed it back to the cryogenic pump 50. A cryogenic gas including helium, hydrogen, and the like can be used as the heat exchange gas 15.

The magnetic refrigerator 20 is installed inside the cryostat 10 and performs cooling using magnetic working substances 22U and 22D having a magnetocaloric effect. The magnetic working substance having a magnetocaloric effect includes, but not limited to, Gd, Gd₃Al₂, GD₅Si₄, Y₂Fe₁₇, MnAs, MnP, CrTe, and the like (see, for example, Non-Patent Literature 2). Magnetic working substance containers 23U and 23D contain the magnetic working substances 22U and 22D inside, and are made of, for example, metal such as stainless steel, titanium, and brass, or fiber-reinforced plastic (FRP), or an oxide such as sapphire and alumina. A magnetic field generating unit 24 is disposed around one of the magnetic working substance containers 23U and 23D, to which the magnetic field generating unit 24 applies a magnetic field. In the present embodiment, a superconducting magnet is used, but a rare earth permanent magnet including neodymium may be used as long as a magnetic field of a required strength can be generated. A hydrogen liquefaction tank 26 is provided in a middle between the magnetic working substance containers 23U and 23D.

As the mechanical refrigerator 35, a mechanical refrigerator such as a Gifford-McMahon (GM) refrigerator, a Stirling refrigerator, a pulse tube refrigerator, or a Joule-Thomson 4K refrigerator is used. The GM refrigerator and the Stirling refrigerator include a mechanism in which a cold storage material reciprocates inside a cylinder, causing adiabatic expansion of a refrigerant gas so as to generate coldness. The pulse tube refrigerator is composed of a compressor, a cold storage unit, and a simple tube such as a pulse tube, and significantly differs from the GM refrigerator in that the cold storage material does not reciprocate inside the cylinder, causing less vibration during operation of the refrigerator. The Joule-Thomson 4K refrigerator utilizes free expansion of a helium gas as a refrigeration capacity of 4K, and is more efficient as compared to an expansion-type refrigerator such as the GM refrigerator and the pulse tube refrigerator.

The thermal anchors 36U and 36D are provided between the cryogenic pump 50 and the magnetic refrigerator 20, and are adapted to cool the heat exchange gas 15 by means of the mechanical refrigerator 35. For example, in a case of a hydrogen liquefaction device, the temperature of the heat exchange gas 15 is maintained at around 20K inside the magnetic refrigerator 20 and at 30K to 40K in the thermal anchors 36U and 36D. The thermal anchor 36U is connected to the magnetic working substance container 23U by means of piping for the heat exchange gas 15. The thermal anchor 36D is connected to the magnetic working substance container 23D by means of a conduit for the heat exchange gas 15. The actuator 42, which constitutes the magnetic refrigerator drive mechanism 40, is provided on an upper portion of the cryostat 10. The actuator 42 moves the drive shaft 43 up and down, thereby moving up and down the drive mechanism bellows 44U and 44D provided on the upper portion of the cryostat 10 and the magnetic working substance containers 23U and 23D provided inside the cryostat 10. This up-down movement causes a relative reciprocating movement of the magnetic working substances 22U and 22D and the magnetic field generating unit 24.

### [Embodiment 1]

FIGS. 2 and 3 show detailed configurational views of main parts of the magnetic refrigeration device using an external pressure bellows-type cryogenic pump, which is a cryogenic pump according to a first embodiment of the present invention. The cryogenic pump 50 is installed inside the cryostat 10 for circulating the heat exchange gas 15, and includes an upper bellows 54, a lower bellows 55, and a partitioning plate 59 as the main components.

The actuator 52 constituting the cryogenic pump drive mechanism 51 is provided on an upper portion of the cryostat 10. The actuator 52 moves the drive shaft 53 up and down, thereby moving an upper support plate 56 and a lower support plate 57 up and down. The upper support plate 56 and the lower support plate 57 are coupled by means of a coupling member 58, thereby transmitting the up-down movement of the drive shaft 53 to the lower support plate 57. Further, an upper support rod 562 and a lower support rod 572 are joined to and firmly integrated with the upper support plate 56 and the lower support plate 57, respectively, and the other ends are fixed to an upper bellows sealing plate 546 and a lower bellows sealing plate 556, respectively. With this structure, the upper bellows sealing plate 546 and the lower bellows sealing plate 556 perform a displacement movement in response to the up-down movement of the drive shaft 53 via the respective upper support rod 562 and the lower support rod 572, and the upper bellows 54 and the lower bellows 55 alternately perform expansion and contraction movements. This expansion and contraction movements cause the volumes of an upper bellows chamber 545 and a lower bellows chamber 555 to increase and decrease in a complementary manner.

In the external pressure bellows-type cryogenic pump 50 according to the first embodiment of the present invention, the upper support plate 56 side on the inner side of the upper bellows 54 and the lower support plate 57 side on the inner side of the lower bellows 55 are opened to a vacuum chamber side of the cryostat 10. Meanwhile, on the outer side of the upper bellows 54, the upper bellows chamber 545 is formed that is surrounded by the upper bellows 54, an upper flange 542, an upper bellows chamber peripheral wall 544, the upper bellows sealing plate 546, and the partitioning plate 59, while on the outer side of the lower bellows 55, the lower bellows chamber 555 is formed that is surrounded by the lower bellows 55, a lower flange 552, a lower bellows chamber peripheral wall 554, the lower bellows sealing plate 556, and the partitioning plate 59. The heat exchange gas 15 is confined inside the upper bellows chamber 545 and the lower bellows chamber 555 with the pressure exerted.

In addition, an upper piping port 548 is provided on a side surface of the upper bellows chamber 545, and a lower piping port 558 is provided on a side surface of the lower bellows chamber 555, so that the heat exchange gas 15 fluidically communicates with the magnetic refrigerator 20. The structure is made such that the upper bellows 54 and the lower bellows 55 are alternately expanded and contracted by the up-down movement of the drive shaft 53 of the cryogenic pump drive mechanism 51, so that the heat exchange gas 15 in the upper bellows chamber 545 and the lower bellows chamber 555 is respectively pushed out through the upper piping port 548 to the upper magnetic working substance container 23U and through the lower piping port 558 to the lower magnetic working substance container 23D, or is sucked therefrom.

The cryogenic pump 50 of the present invention is structured such that two upper bellows 54 and lower bellows 55 are connected in a vertically symmetrical arrangement, and the inner sides of the upper bellows 54 and the lower bellows 55 are in a vacuum with no pressure exerted as described above. Further, the outer sides of the upper bellows 54 and the lower bellows 55 are surrounded by a cylindrical container composed of slightly larger upper bellows chamber peripheral wall 544 and lower bellows chamber peripheral wall 554, and the volume between the upper bellows chamber 545 and lower bellows chamber 555 and the piping outside the upper piping port 548 and lower piping port 558 becomes the pump volume. The mechanism is made such that the cryogenic pump drive mechanism 51 moves the upper flange 542 and the upper bellows sealing plate 546 relative to the partitioning plate 59 installed between the upper bellows 54 and the lower bellows 55, so that the upper/lower pump volume ratio changes, thereby causing the heat exchange gas 15 to flow. When this mechanism is adopted, the pressure acts on the upper bellows 54 and the lower bellows 55 from outside, allowing the use with an increased operating pressure as compared to a case in which the pressure is exerted from inside the upper bellows 54 and lower bellows 55.

FIG. 4 is a graph showing experiment results of pump operation using the external pressure bellows-type cryogenic pump shown in FIG. 3. A thick solid line and a thin solid line in FIG. 4 show changes over time in the pressure of the lower bellows and the upper bellows, respectively. In this experiment, the upper bellows 54 and the lower bellows 55 are associated with each other, and the up-down movements simultaneously take place. In the upper bellows 54, by moving the upper bellows sealing plate 546 and the upper bellows 54 up and down using the upper support rod 562 connected to the actuator 52, a space in the upper bellows chamber 545 is increased and decreased to generate a flow rate. Likewise, also in the lower bellows 55, a space in the lower bellows chamber 555 surrounded by the lower bellows sealing plate 556, the lower bellows 55, and the lower bellows chamber peripheral wall 554 changes by moving the lower bellows sealing plate 556 and the lower bellows 55 up and down to generate a flow rate. It can be confirmed from FIG. 4 that a pressure difference between the spaces of the upper and lower bellows occurs, starting from an average operating pressure of 0.1 MPa as a boundary. Since the flow rate is proportional to the pressure difference, FIG. 4 demonstrates the operation of the cryogenic pump using the external pressure bellows-type system.

As shown in FIG. 1, the inside of the vacuum heat insulating container (cryostat) 10 can be evacuated by an exhaust device (not shown) and maintains vacuum heat insulation. In the present embodiment, since an AMR system is adopted as the refrigeration cycle, outside the cryostat 10, the magnetic refrigerator drive mechanism 40 is attached which is composed of the drive shaft 43 driven by the actuator 42 and the drive mechanism bellows 44U and 44D for causing the magnetic working substance containers 23U and 23D filled with the magnetic working substances 22U and 22D to move up and down. In addition, since the magnetic refrigerator 20 requires the heat exchange gas 15 with a cryogenic temperature, the heat exchange gas 15, which has a temperature close to room temperature, introduced by means of the cryogenic pump 50 needs to be cooled until reaching the temperature of the magnetic working substances 22U and 22D of 100 K or lower to be supplied. Therefore, in the present embodiment, the thermal anchors 36U and 36D cooled by the GM refrigerator 35 are provided between the cryogenic pump 50 and the magnetic refrigerator 20, and the heat exchange gas 15 is cooled via these gas refrigerators by means of the drive shaft 53 and is supplied to the magnetic refrigerator 20. In the present embodiment, the GM refrigerator is used to cool the thermal anchor 36, but refrigerators of other systems may also be used to perform cooling.

In the present embodiment, since the AMR system is used as the refrigeration cycle, the magnetic working substances 22U and 22D are configured to reciprocate continuously or intermittently by means of the magnetic refrigerator drive mechanism 40, and move in and out of the magnetic field generating unit 24. Further, in synchronization with this AMR cycle, the flow direction of the heat exchange gas 15 is changed by means of the cryogenic pump 50. The reciprocating movement of the magnetic working substances 22U and 22D, the opening and closing operation of a valve system (not shown), and the operation of other auxiliary devices are controlled by a controller (not shown).

In the magnetic refrigerator 20, the upper magnetic working substance container 23U and the lower magnetic working substance container 23D, which are respectively filled with the magnetic working substance 22U and the magnetic working substance 22D that generate a magnetocaloric effect, are coupled as one pair, and the upper and lower magnetic working substance containers fluidically communicate with each other. The cryogenic pump 50, in association with the refrigeration cycle, causes the heat exchange gas 15 to pass through the upper piping port 548 and the lower piping port 558 and to circulate so as to be fed back to the cryogenic pump 50 via the magnetic working substance containers 23U and 23D filled with the magnetic working substances 22U and 22D, thereby performing heat exchange with the magnetic working substances 22U and 22D.

FIGS. 5A to 5D are views schematically showing the configuration of the external pressure bellows-type cryogenic pump 50 according to the present embodiment, and the position of the magnetic working substance and a change in a flow of the heat exchange gas in the AMR cycle. The AMR cycle and the cryogenic pump bellows cycle associated therewith will be described below with reference to these drawings. FIG. 5A shows the initial state. The cryogenic pump drive mechanism 51 sets the upper bellows 54 of the cryogenic pump 50 to be in an expanded state and the lower bellows 55 to be in a compressed state. The actuator 42 moves the magnetic working substances 22U and 22D downward (excitation of the upper magnetic working substance 22U/demagnetization of the lower magnetic working substance 22D). During this time, the heat exchange gas 15 is prevented from being introduced into the vacuum heat insulating container 10.

Next, in FIG. 5B, with the upper magnetic working substance 22U contained in the magnetic field generating unit 24, the cryogenic pump drive mechanism 51 is driven to compress the upper bellows 54 of the cryogenic pump 50 and to expand the lower bellows 55, thereby causing the heat exchange gas 15 to flow counterclockwise from a lower side to an upper side in the magnetic working substances 22U and 22D to perform the heat exchange.

Next, in FIG. 5C, the drive mechanism 51 sets the upper bellows 54 of the cryogenic pump 50 to be in a compressed state and the lower bellows 55 to be in an expanded state. The flow of the heat exchange gas 15 is stopped again, and the magnetic working substances 22U and 22D are moved upward this time (demagnetization of the upper magnetic working substance 22U/excitation of the lower magnetic working substance 22D).

Next, in FIG. 5D, with the lower magnetic working substance 22D contained in the magnetic field generating unit 24, the drive mechanism 51 is driven to expand the upper bellows 54 of the cryogenic pump 50 and to compress the lower bellows 55, thereby causing, this time, the heat exchange gas 15 to flow clockwise from an upper side to a lower side in the magnetic working substances 22U and 22D to perform the heat exchange. Then, the state returns to the initial state of FIG. 5A.

By controlling the position of the magnetic working substances 22U and 22D and the flow direction of the heat exchange gas 15 according to the AMR cycle shown in FIGS. 5A to 5D, the heat generated through the magnetocaloric effect is effectively transmitted to the heat exchange gas 15, thereby enabling to obtain a high refrigeration effect (Non-Patent Literature 2). With the drive mechanism 51, the upper bellows 54 and the lower bellows 55 of the cryogenic pump 50 repeat the expanded state and the compressed state in opposite phases.

### [Embodiment 2]

FIG. 6 shows a schematic sectional view of a main part of the magnetic refrigeration device using a double external pressure bellows-type cryogenic pump, which is a cryogenic pump according to another embodiment of the present invention. The cryogenic pump according to a second embodiment also has a structure in which the upper and lower bellows are arranged vertically symmetrical with a partitioning plate 70 attached to a middle portion between an upper bellows chamber peripheral wall 672 and a lower bellows chamber peripheral wall 772. An outer frame including an upper support frame 69 and a lower support frame 79 is fixed to the drive shaft 53 and performs the same movement as the up-down movement of the drive shaft 53. Meanwhile, an upper flange 66 and a lower flange 76, the upper bellows chamber peripheral wall 672 and the lower bellows chamber peripheral wall 772, and the partitioning plate 70 are fixed directly or indirectly to the cryostat 10.

First, the upper bellows will be described. The first difference from Embodiment 1 is that the upper bellows is composed of two large and small bellows, which are an outer bellows (hereinafter referred to as an upper outer bellows 64) and an inner bellows (hereinafter referred to as an upper inner bellows 65) that are arranged so as to be doubled concentrically about the center axis of the drive shaft 53. One end of each of the upper outer bellows 64 and the upper inner bellows 65 is airtightly fixed to the upper flange 66 shared in common, and the other ends are airtightly fixed to an outer upper sealing plate 642 and an inner upper sealing plate 652, respectively. The cylindrical upper bellows chamber peripheral wall 672 is disposed on an outer side of the upper outer bellows 64 so as to surround it, and forms an upper bellows chamber 67, together with the upper flange 66, the upper outer bellows 64, the outer upper sealing plate 642, and the partitioning plate 70 so as to contain the heat exchange gas 15. Further, a side surface of the upper bellows chamber peripheral wall 672 is provided with an upper piping port 674, through which the heat exchange gas 15 is fed to the magnetic refrigerator or the heat exchange gas 15 is fed back from the magnetic refrigerator.

The lower bellows, which has a structure vertically symmetrical with the upper bellows structure described above, is similarly composed of a lower outer bellows 74, a lower inner bellows 75, an outer lower sealing plate 742, an inner lower sealing plate 752, and a lower flange 76. The cylindrical lower bellows chamber peripheral wall 772 is disposed on an outer side of the lower outer bellows 74 so as to surround it, and forms a lower bellows chamber 77, together with the lower flange 76, the lower outer bellows 74, the outer lower sealing plate 742, and the partitioning plate 70 so as to contain the heat exchange gas 15. Further, a side surface of the lower bellows chamber peripheral wall 772 is provided with a lower piping port 774.

In a case of the cryogenic pump of the second embodiment also, as shown in FIG. 6, the outer upper sealing plate 642 and the inner upper sealing plate 652 are coupled to the drive shaft 53 and can perform the up-down movement in association with the up-down movement of the drive shaft 53. Meanwhile, the outer lower sealing plate 742 and the inner lower sealing plate 752 are fixed to a lower drive shaft 73, but the lower drive shaft 73 is fixed to the outer frame including the upper support frame 69 and the lower support frame 79 which are coupled and fixed to the drive shaft 53, and thus, the outer lower sealing plate 742 and the inner lower sealing plate 752 can also perform the same up-down movement as the up-down movement of the drive shaft 53. As a result, the outer upper sealing plate 642 and the outer lower sealing plate 742 can be alternately expanded and compressed relative to the partitioning plate 70 fixed to the cryostat 10, and the volumes of the upper bellows chamber 67 and the lower bellows chamber 77 complementarily increase and decrease due to this expansion and compression movement.

Another difference from Embodiment 1 is that in the double external pressure bellows-type cryogenic pump, the inner sides (center axis side of the drive shaft 53) of the upper outer bellows 64 and the lower outer bellows 74 are not in a vacuum state, but the inner sides of the upper inner bellows 65 and the lower inner bellows 75 are opened to the cryostat 10 through openings 654 respectively provided in the upper flange and the lower flange, so as to be in a vacuum state.

Meanwhile, a space (hereinafter referred to as an upper bellows space 68) surrounded by the upper outer bellows 64, the upper inner bellows 65, the outer upper sealing plate 642, the inner upper sealing plate 652, and the upper flange 66, and a space (hereinafter referred to as a lower bellows space 78) surrounded by the lower outer bellows 74, the lower inner bellows 75, the outer lower sealing plate 742, the inner lower sealing plate 752, and the lower flange 76 contain the same fluid. Further, this fluid is in fluid communication from the upper flange 66 to the lower flange 76 through a hollow bypass line 72 that passes the outer side of the upper bellows chamber peripheral wall 672 and the lower bellows chamber peripheral wall 772, so that even when the upper bellows chamber 67 and the lower bellows chamber 77 alternately perform expanding and contracting operations, the fluid moves to maintain the same air pressure. Note that the fluid in the bellows spaces may be the same as or different from the fluid in the bellows chamber (heat exchange gas 15).

The external pressure bellows pump shown in Embodiment 1 performs pumping operation by pushing out the heat exchange gas outside the bellows by taking advantage of the typical property of the bellows of being weak against an internal pressure while being strong against an external pressure. However, the limit of the maximum pressure difference between the inside and outside of the bellows is around 2 MPa, and when the pump is to be enlarged, the bellows need to be specially ordered, raising the bellows cost to be extremely high. By contrast, in the present embodiment, since another small inner bellows is inserted inside the external pressure bellows, it is possible to offset the pressure of an external heat exchange gas acting on the outer bellows with the pressure of a second fluid confined within the space of the inner bellows. Since the pressure difference between the inside and outside of the outer bellows can be brought closer to zero, a commercially available so-called vacuum bellows can be used as the outer bellows.

Meanwhile, in the external pressure bellows pump of Embodiment 1, since the inside of the outer bellows, which was in a vacuum, has a high pressure, the internal pressure fluctuated due to the expansion and contraction of the bellows (FIG. 4). To solve this, as described above, the bypass line 72 connecting the upper bellows space 68 and the lower bellows space 78 is provided. In this manner, the lower outer bellows 74 expands when the upper outer bellows 64 contracts so as to be able to offset the pressure fluctuation in the bellows spaces on the inner sides of the upper and lower bellows. Since the insides of the upper inner bellows 65 and the lower inner bellows 75 are in a vacuum, a large pressure difference occurs between the inside and outside, but in a case of bellows with a small-diameter, since products having a high pressure resistance are generally available, there is also an advantage in terms of cost.

The operation of the double external pressure bellows-type cryogenic pump will be described with reference to FIGS. 7A to 7D. FIG. 7A shows the initial state. The cryogenic pump drive mechanism 51 sets the upper outer bellows 64 and the upper inner bellows 65 of the cryogenic pump 50 to be in an expanded state and the lower outer bellows 74 and the lower inner bellows 75 to be in a compressed state and stopped. With this state, the actuator 42 moves the magnetic working substances 22U and 22D downward (excitation of the upper magnetic working substance 22U/demagnetization of the lower magnetic working substance 22D). During this time, there is no flow of the heat exchange gas 15 inside the AMR, and the heat exchange gas 15 is not introduced into the vacuum heat insulating container 10.

Next, in the process of FIG. 7B, with the upper magnetic working substance 22U contained in the magnetic field generating unit 24, the cryogenic pump drive mechanism 51 is driven to compress the upper outer bellows 64 and the upper inner bellows 65 of the cryogenic pump 50 and to expand the lower outer bellows 74 and the lower inner bellows 75, thereby causing the heat exchange gas 15 to flow counterclockwise from a lower side to an upper side in the magnetic working substances 22U and 22D to perform the heat exchange.

Next, in the process of FIG. 7C, the cryogenic pump drive mechanism 51 sets the upper outer bellows 64 and the upper inner bellows 65 of the cryogenic pump 50 to be in a compressed state and the lower outer bellows 74 and the lower inner bellows 75 to be in an expanded state. The flow of the heat exchange gas 15 is stopped again, and with this state, the actuator 42 moves the magnetic working substances 22U and 22D upward this time (demagnetization of the upper magnetic working substance 22U/excitation of the lower magnetic working substance 22D).

Next, in the process of FIG. 7D, with the lower magnetic working substance 22D contained in the magnetic field generating unit 24 by means of the actuator 42, the cryogenic pump drive mechanism 51 is driven to expand the upper outer bellows 64 and the upper inner bellows 65 of the cryogenic pump 50 and to compress the lower outer bellows 74 and the lower inner bellows 75, thereby causing, this time, the heat exchange gas 15 to flow clockwise from an upper side to a lower side in the magnetic working substances 22U and 22D to perform the heat exchange. Thereafter, the state returns to the initial state of FIG. 7A.

As explained in Embodiments 1 and 2, according to the magnetic refrigeration device of the present invention, since the bellows-type fluid pump can be installed inside the cryostat, it is possible to operate at low temperatures. According to the embodiments of the present invention, the power consumption is significantly reduced to one-fifth or less, at 1 kW or lower. Further, since a reciprocating flow can be generated simply by moving the upper and lower bellows up and down, it is possible to reduce auxiliary components such as solenoid valves, and there is also a great advantage of the system to be extremely simplified.

### INDUSTRIAL APPLICABILITY

The magnetic refrigeration device of the present invention can be used for a refrigeration and cooling device in the range of temperatures from room temperature to a cryogenic temperature range. Specifically, the magnetic refrigeration device of the present invention can be widely applied to air conditioners, cold storages, freezers, cryogenic refrigerators, hydrogen liquefaction devices, and the like.

Further, use of the magnetic refrigeration device in which the cryogenic pump using the bellows of the present invention is mounted enables adoption of cryogenic pumps in a greater number of cryogenic devices, which is expected to significantly contribute to the development of cryogenic equipment with a low power consumption using cryogenic pumps that have not previously been realized.

### REFERENCE SIGNS LIST

- 100: magnetic refrigeration device
- 10: cryostat
- 53: drive shaft
- 15: heat exchange gas
- 20: magnetic refrigerator
- 22U: upper magnetic working substance
- 22D: lower magnetic working substance
- 23U: upper magnetic working substance container
- 23D: lower magnetic working substance container
- 24: magnetic field generating unit (superconducting magnet)
- 26: hydrogen liquefaction tank
- 30: thermal anchor
- 31: hydrogen gas storage tank
- 35: mechanical refrigerator (GM refrigerator)
- 36U, 36D: thermal anchor
- 40: magnetic refrigerator drive mechanism
- 42: actuator
- 43: drive shaft
- 44U, 44D: drive mechanism bellows
- 50: cryogenic pump
- 51: cryogenic pump drive mechanism
- 52: actuator
- 53: drive shaft
- 54: upper bellows
- 542: upper flange
- 544: upper bellows chamber peripheral wall
- 545: upper bellows chamber
- 546: upper bellows sealing plate
- 548: upper piping port
- 55: lower bellows
- 552: lower flange
- 554: lower bellows chamber peripheral wall
- 555: lower bellows chamber
- 556: lower bellows sealing plate
- 558: lower piping port
- 56: upper support plate
- 562: upper support rod
- 57: lower support plate
- 572: lower support rod
- 58: coupling member
- 59: partitioning plate
- 64: upper outer bellows
- 642: outer upper sealing plate
- 65: upper inner bellows
- 652: inner upper sealing plate
- 654: opening
- 66: upper flange
- 67: upper bellows chamber
- 672: upper bellows chamber peripheral wall
- 674: upper piping port
- 68: upper bellows space
- 69: upper support frame
- 70: partitioning plate
- 72: bypass line
- 73: lower drive shaft
- 74: lower outer bellows
- 742: outer lower sealing plate
- 75: lower inner bellows
- 752: inner lower sealing plate
- 76: lower flange
- 772: lower bellows chamber peripheral wall
- 774: lower piping port
- 77: lower bellows chamber
- 78: lower bellows space
- 79: lower support frame

## Claims

1. A magnetic refrigeration device adapted to cool an object to be cooled, comprising:
a cryostat with an inside evacuated to be heat insulative;
a cryogenic pump installed inside the cryostat to circulate a heat exchange gas;
a magnetic refrigerator installed inside the cryostat to cool using a magnetic working substance having a magnetocaloric effect;
a drive mechanism including a drive shaft to feed the heat exchange gas from the cryogenic pump to the magnetic refrigerator and to feed back the heat exchange gas to the cryogenic pump; and
a thermal anchor provided between the cryogenic pump and the magnetic refrigerator to cool the heat exchange gas,
wherein
the cryogenic pump has an upper bellows and a lower bellows facing each other via a partitioning plate,
at least a part of an inner side of each of the upper bellows and the lower bellows is opened to a vacuum chamber side of the cryostat, and
with the heat exchange gas, under pressure, contained in an upper bellows chamber and a lower bellows chamber that are respectively formed on outer sides of the upper bellows and the lower bellows, the upper bellows and the lower bellows are alternately expanded and contracted so that the heat exchange gas in one of the upper bellows chamber and the lower bellows chamber is pushed out to a magnetic refrigerator side by the drive shaft, and the heat exchange gas in another of the upper bellows chamber and the lower bellows chamber is sucked from the magnetic refrigerator side by the drive shaft.

2. The magnetic refrigeration device according to claim 1, wherein the magnetic refrigerator comprises:
a magnetic working substance container filled with the magnetic working substance having the magnetocaloric effect;
a magnetic field generating unit disposed so as to surround the magnetic working substance container, to apply a magnetic field to the magnetic working substance; and
a mechanism to cause the magnetic working substance to continuously or intermittently perform a reciprocating movement so as to be taken in and out of the magnetic field,
wherein
the cryogenic pump is configured to operate with an AMR system in which the heat exchange gas is caused to flow through the magnetic working substance container in synchronization with the reciprocating movement of the magnetic working substance.

3. The magnetic refrigeration device according to claim 2, wherein
the cryogenic pump comprises:
the upper bellows having one end fixed to an upper flange and an upper sealing plate fixed to another end;
the lower bellows having one end fixed to a lower flange and a lower sealing plate fixed to another end;
an upper bellows chamber peripheral wall fixed to the upper flange so as to surround the outer side of the upper bellows;
a lower bellows chamber peripheral wall fixed to the lower flange so as to surround the outer side of the lower bellows; and
the partitioning plate fixed to an inner side of a boundary between the upper bellows chamber peripheral wall and the lower bellows chamber peripheral wall, and provided between the upper sealing plate and the lower sealing plate,
wherein
an inner side of an upper flange side of the upper bellows and an inner side of a lower flange side of the lower bellows have an opening, respectively, so as to be opened to the vacuum chamber side of the cryostat,
an upper piping port is provided in the upper bellows chamber formed by the upper bellows, the upper flange, the upper bellows chamber peripheral wall, the partitioning plate, and the upper sealing plate,
a lower piping port is provided in the lower bellows chamber formed by the lower bellows, the lower flange, the lower bellows chamber peripheral wall, the partitioning plate, and the lower sealing plate, and
the heat exchange gas contained in the upper bellows chamber and the lower bellows chamber is configured to switch a direction flowing from an upper piping port side to a lower piping port side and a direction flowing from the lower piping port side to the upper piping port side, by causing volumes of the upper bellows chamber and the lower bellows chamber complementarily increased and decreased across the partitioning plate.

4. The magnetic refrigeration device according to claim 2, wherein
the cryogenic pump comprises:
the upper bellows composed of an upper outer bellows and an upper inner bellows that are disposed concentrically around a center axis of the drive shaft; the upper outer bellows having one end entirely fixed to an upper flange and another end entirely fixed to an outer upper sealing plate; the upper inner bellows having one end entirely fixed to the upper flange and another end entirely fixed to an inner upper sealing plate; the upper inner bellows being opened to the vacuum chamber side of the cryostat through an opening, which is provided on an inner side relative to an inner perimeter of the upper inner bellows, of the upper flange;
the lower bellows composed of a lower outer bellows and a lower inner bellows that are disposed concentrically around the center axis of the drive shaft; the lower outer bellows having one end entirely fixed to a lower flange and another end entirely fixed to an outer lower sealing plate; the lower inner bellows having one end entirely fixed to the lower flange and another end entirely fixed to an inner lower sealing plate; the lower inner bellows being opened to the vacuum chamber side of the cryostat through an opening, which is provided on an inner side relative to an inner perimeter of the lower inner bellows, of the lower flange;
an upper bellows chamber peripheral wall fixed to the upper flange so as to surround an outer side of the upper outer bellows;
a lower bellows chamber peripheral wall fixed to the lower flange so as to surround an outer side of the lower outer bellows; and
the partitioning plate fixed to an inner side of a boundary between the upper bellows chamber peripheral wall and the lower bellows chamber peripheral wall, and provided between the upper sealing plate and the lower sealing plate,
wherein
an upper bellows space surrounded by the upper outer bellows, the upper inner bellows, the outer upper sealing plate, the inner upper sealing plate, and the upper flange and a lower bellows space surrounded by the lower outer bellows, the lower inner bellows, the outer lower sealing plate, the inner lower sealing plate, and the lower flange, are filled with a fluid, the fluid in the upper bellows space and the fluid in the lower bellows space further communicating with each other through a bypass line coupling the upper bellows space and the lower bellows space,
an upper piping port is provided in the upper bellows chamber formed by the upper outer bellows, the upper flange, the upper bellows chamber peripheral wall, the outer upper sealing plate, and the partitioning plate,
a lower piping port is provided in the lower bellows chamber formed by the lower outer bellows, the lower flange, the lower bellows chamber peripheral wall, the outer lower sealing plate, and the partitioning plate, and
the heat exchange gas contained in the upper bellows chamber and the lower bellows chamber is configured to switch a direction flowing from an upper piping port side to a lower piping port side and a direction flowing from the lower piping port side to the upper piping port side, by causing a volume of each of the upper bellows chamber and the lower bellows chamber complementarily increased and decreased across the partitioning plate.

5. The magnetic refrigeration device according to claim 3 or 4, wherein
the upper flange and the lower flange, and the partitioning plate are fixedly coupled to a housing of the cryostat, and
the volume of the heat exchange gas contained in the upper bellows chamber and the lower bellows chamber, which are partitioned by the partitioning plate, is caused to be increased and decreased by moving up and down simultaneously the upper sealing plate or the outer upper sealing plate and the lower sealing plate or the outer lower sealing plate relative to the partitioning plate by the drive shaft of the drive mechanism fixed to the housing of the cryostat.

6. The magnetic refrigeration device according to claim 1, wherein the heat exchange gas is a cryogenic gas including a helium gas or a hydrogen gas.

7. The magnetic refrigeration device according to claim 1, wherein the thermal anchor is cooled by a mechanical refrigerator including a Gifford-McMahon (GM) refrigerator, a pulse tube refrigerator, and a Stirling refrigerator.

8. The magnetic refrigeration device according to claim 2, wherein the magnetic field generation unit is a superconducting magnet.

9. A liquefaction device configured to generate a liquid from the cryogenic gas using the magnetic refrigeration device according to claim 6.
